# EUROPEAN PATENT SPECIFICATION

(11) **EP 0 392 470 B1**
(45) Date of publication and mention of the grant of the patent: **14.07.1993**
(21) Application number: 90106874.2
(22) Date of filing: 10.04.1990
(51) Int. Cl.: F16L 21/02, F16J 15/32

(54) **Plastic bore seal**
Kunststoff-Bohrungsdichtung
Joint pour alésage en matière plastique

(30) Priority: 10.04.1989 US 335630
(43) Date of publication of application: 17.10.1990
(73) Proprietor: FMC CORPORATION, Chicago Illinois 60601 (US)
(72) Inventor: Ungchusri, Tep, The Woodlands, Texas 77380 (US); Earl, Paul M., Houston, Texas 77062 (US)
(74) Representative: Bardehle, Heinz, Dipl.-Ing.

(56) References cited:
- CH-A- 264 706
- DE-A- 2 305 936
- DE-U- 7 323 206
- GB-A- 2 038 976

## Description

### BACKGROUND OF THE INVENTION

This invention relates to annular bore seals for piping devices, and more particularly to such seals constructed of plastic or other non-metallic compositions that are resistant to elevated temperatures and high pressures.

As indicated by the abundant prior art, annular seals of many designs and compositions have been proposed for use in sealing the bores of various piping devices such as pipe connectors, pipe swivel joints, valves and other oil well drilling and completion equipment, and the results achieved therewith likewise have been varied. Many seals currently used in such devices are made from elastomers which have inherent limitations with respect to extrusion, fluid incompatibility, temperature range, creep, and explosive decompression, i.e. seal rupture resulting from the escape of gas that has permeated the elastomer at high pressure and temperature, when the pressure on the seal is quickly released. A metal seal is used when dealing with broad temperature ranges, extreme pressures and highly adverse fluid environments, but such seals are limited to static or substantially static applications. Furthermore, metal seals will function satisfactorily only with very smooth seal bore surfaces and will leak if the surface is even lightly scratched. Yet another disadvantage with metal bore seals is that the drag between the seal and the bore surface is much higher than that of elastomeric or plastic bore seals, sometimes requiring a seal puller to remove the metal seal from its chamber or pocket. Very careful handling of metal seals is required, such as during packaging and installation, thereby further increasing the difficulty and cost in providing a satisfactory product of this type.

Accordingly, one object of the present invention is to provide a plastic bore seal that will function satisfactorily at high pressures and temperatures in either a static or dynamic mode in a wide variety of piping devices including, for example, conventional pipe connectors and swivel joints. Another object of the present invention is to provide a plastic bore seal that can be used as an alternative to a metal seal counterpart without having to redesign the piping device pocket or chamber in which the seal resides.

### SUMMARY OF THE INVENTION

The present invention comprises a plastic bore seal assembly that can be utilized in either a static mode, such as in non-rotatable pipe connectors, or a dynamic mode, such as in pipe swivel joints, to provide a low cost, bubbletight, damage resistant seal that overcomes the above described disadvantages of elastomeric and metal seals. A seal assembly according to the present invention essentially comprises a seal sleeve element of plastic with an annular sealing lip at both ends, an anti-extrusion ring surrounding the seal sleeve intermediate its sealing lips, one or more annular sleeve-like finger springs surrounded by the seal sleeve, and in some circumstances a wear sleeve within the bore of the seal sleeve and finger spring or springs, the foregoing elements fitting together in a secure manner to constitute an assembly for installation as a unit into the seal chamber or pocket of a pipe connector, swivel joint or other piping device. The seal sleeve has a centrally located external groove shaped to the configuration of the anti-extrusion ring for retaining said ring in proper position on the sleeve, and when combined with a single finger-spring a radially-inward extending flange at both ends to retain the finger spring against axial dislocation from its proper position within the sleeve. The wear sleeve has an axial length commensurate with that of the seal sleeve, and a central outwardly extending annular rib that supports the finger spring or springs in tight-fitting position against the seal sleeve bore.

The seal sleeve can be constructed from various plastic materials as the circumstances of intended use dictate, such as for instance glass/moly filled PTFE (polytetrafluoroethylene) or PEEK (polyetheretherketone). The anti-extrusion ring can be of rectangular cross-sectional configuration with dimensions depending upon the size and shape of the seal chamber or pocket in the pipe connector, swivel joint or other piping device and the location of the interface between the opposed piping elements where extrusion of the seal sleeve is to be prevented. One embodiment of finger spring has an annular continuous central section and a plurality of seal sleeve support fingers extending axially in opposite directions from circumferentially spaced locations on the central section to retain the annular sealing lips of the seal sleeve in proper functional position against the opposed bore surfaces of the pipe connector or swivel joint elements. The central rib of the wear sleeve, which sleeve is not essential to the satisfactory functioning of the seal assembly of this invention but is preferably included where erosion of the finger spring and seal sleeve by fluid flow through the connector or swivel joint is a problem, is sized and located to bear tightly against the central section of the finger spring and hold the complete seal assembly together, while the lesser outside diameter of the wear sleeve opposite ends provide room for the spring fingers to flex radially inwardly as the seal assembly is installed in tight-fitting position in its chamber or pocket in the connector, swivel joint or other piping device.

### BRIEF DESCRIPTION OF THE DRAWINGS

Figure 1, comprising Figures 1A and 1B, is an exploded isometric view of a plastic bore seal assembly according to the present invention, showing the cross-sectional configuration of the seal sleeve, the finger spring and the wear sleeve.

Figure 2 is a longitudinal section view, on a reduced scale, of a pipe connector with the seal assembly of Figure 1 installed therein.

Figure 3 is an enlarged longitudinal section view of the assembled seal assembly of Figure 1, the left half of the view showing the assembly prior to installation in its chamber, and the right half of the view showing the assembly installed in the chamber.

Figures 4 and 5 are fragmentary longitudinal section views of the seal assembly of Figures 1-3 installed in pipe swivel joints fitted with anti-galling/anti-extrusion rings.

Figure 6 is a fragmentary longitudinal section view of another embodiment of a plastic bore seal assembly in accordance with the present invention.

Figure 7 is a view like Figure 3 but illustrating yet another embodiment of a seal assembly according to the present invention.

### DESCRIPTION OF THE PREFERRED EMBODIMENT

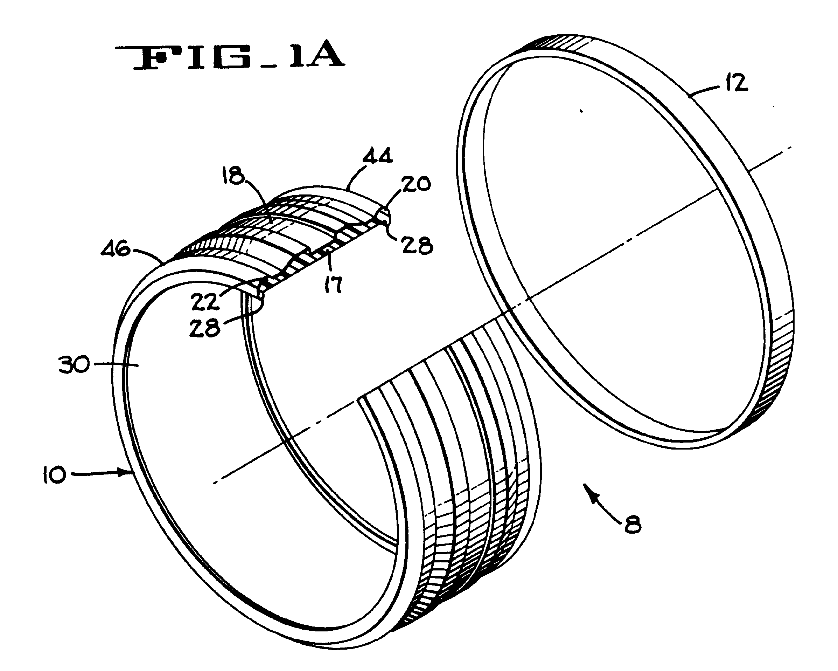

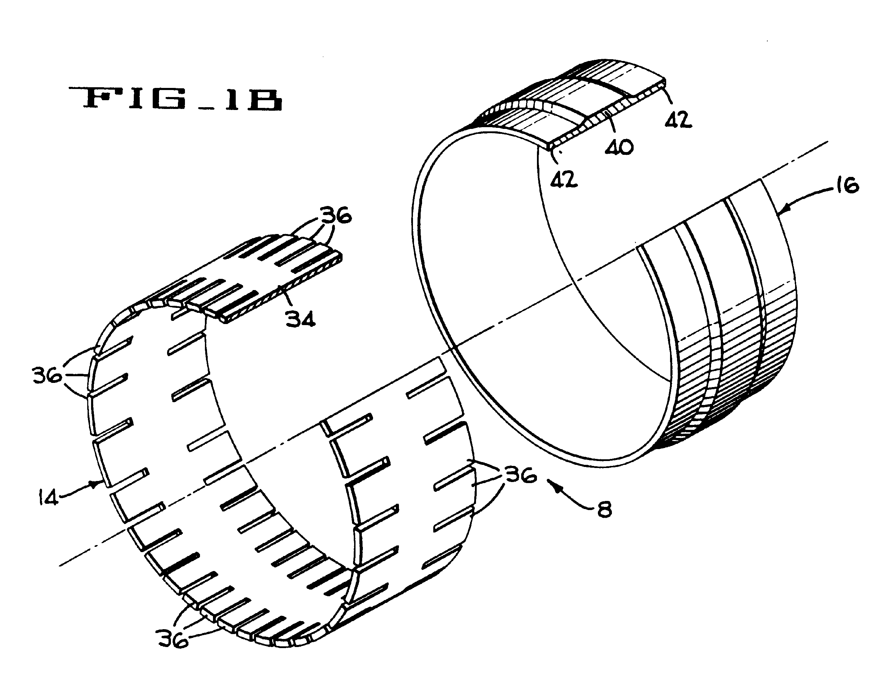

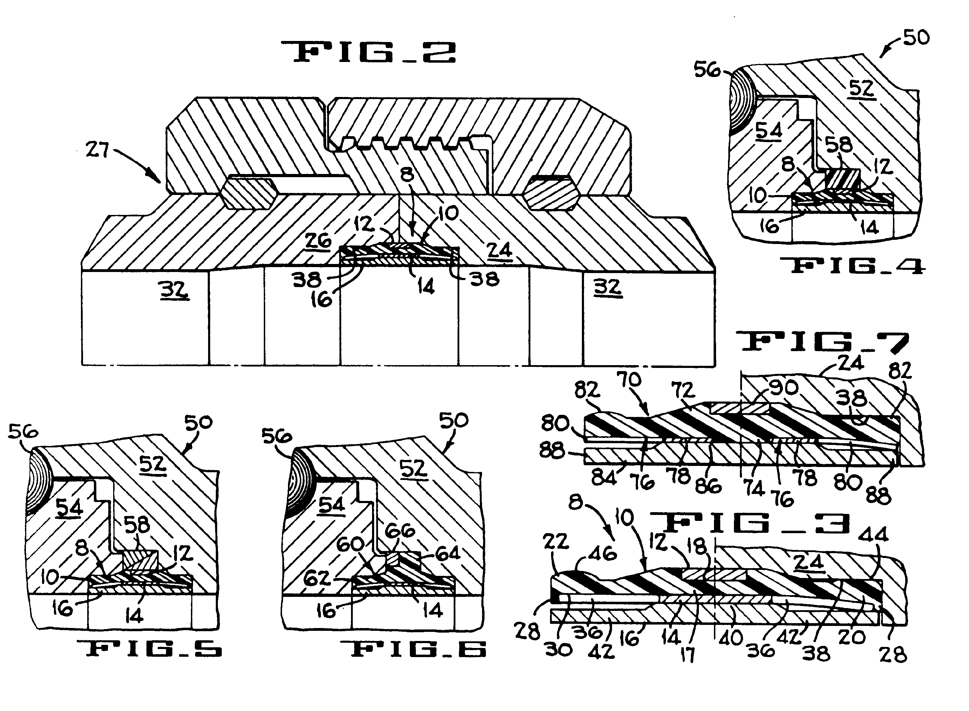

The plastic bore seal assembly 8 illustrated in Figures 1-5 comprises a sleeve-like plastic seal element 10, an anti-extrusion ring 12, a sleeve-like finger spring 14, and a wear sleeve 16, these elements shown properly assembled together in Figures 2-5.

The seal element 10 comprises a central portion 17 with an outer annular groove 18 within which resides (Figures 2-5) the anti-extrusion ring 12, two sealing lips 20, 22 each extending axially from the central portion 17 for establishing a fluid-tight seal with opposed ends 24, 26 of a pipe connector 27 such as shown in Figure 2, and an inwardly-extending radial flange 28 at each end for retaining the finger spring 14 in proper position in the seal element bore 30. The anti-extrusion ring 12 is of rectangular cross-section and is located to bridge the gap between the opposed pipe connector ends 24, 26, thereby preventing extrusion of the plastic seal element 10 into that gap in response to high pressure in connector bore 32.

The finger spring 14 has a central annular continuous portion 34, and a plurality of circumferentially spaced spring fingers 36 extending axially in opposite directions from the central portion 34. The spring fingers 36 support the seal sleeve lips 20, 22 in fluid-tight contact with the adjacent bore surfaces 38 of the connector elements 24, 26 and serve to provide the seal sleeve with a memory property that is not affected by high pressure and temperature cycling.

The wear sleeve 16 has a central portion 40 that fits against the finger spring central portion 34, and end portions 42 of lesser outside diameter that reside radially inwardly from the spring fingers 36. As seen best in the right half of Figure 3, the annular space between the wear sleeve end portions 42 and the spring fingers 36 enable the fingers to flex radially inwardly during installation of the seal assembly into its chamber or pocket in the pipe connector 27.

The seal sleeve lips 20, 22 preferably have radiused surfaces 44, 46 that press tightly against the adjacent bore surfaces 38 of the pipe connector ends 24, 26. This provides a relatively large lip sealing area that produces a reliable yet forgiving pressure-tight interface between the seal and the connector bore, and also a minimum of only one potential leak path past each lip.

In Figures 4 and 5 the seal assembly 8 is shown in functional position in a pipe swivel joint 50 having relatively rotatable elements 52, 54 connected by a plurality of bearing balls 56 (only one shown) in the usual manner. In order to reduce or eliminate galling and provide additional anti-extrusion properties, the swivel joint 50 includes an anti-extrusion ring 58 against which the seal assembly anti-extrusion ring 12 resides. The anti-extrusion ring 58 can be one solid element as shown in Figure 4, or as seen in Figure 5 it can comprise two elements, each of triangular cross-section, that will diverge axially when pressure is applied from the seal assembly 8 to eliminate any radial extrusion gap between the joint elements 52, 54.

Figure 6 illustrates a modified version 60 of the seal assembly 8 installed in functional position in the swivel joint 50. The plastic seal sleeve 62 of the seal assembly 60 has a central rib 64 extending radially outwardly into the space otherwise occupied by the anti-extrusion ring 58 of the embodiments shown in Figures 4 and 5, and a square or rectangular cross-section anti-extrusion ring 66 bridging the gap between the joint elements 52, 54. The anti-extrusion rings can be constructed of plastic or a metallic material to provide protection under high pressure should the primary plastic seal sleeve 10 be damaged by high temperature.

Figure 7 illustrates yet another embodiment 70 of plastic bore seal assembly according to the present invention. The seal assembly 70 includes a plastic seal sleeve 72 that closely resembles its counterpart 10 of Figures 1-5, but which has a radially inwardly oriented central annular rib 74 and does not have inwardly-extending radial flanges at its ends as does sleeve 10 at 28; otherwise the sleeves 72 and 10 are essentially identical in configuration. The seal assembly 70 further includes two identical sleeve-like finger springs 76, as contrasted with the single finger spring 14 of seal assembly 8, each finger spring 76 having an annular continuous portion 78 and a plurality of circumferentially spaced spring fingers 80 extending axially from one end of the portion 78. The finger springs 76 are positioned against opposite ends of the seal sleeve's central inner rib 74 as seen in Figure 7, and the spring fingers 80 underlie and support the sealing lips 82 of the seal sleeve 72 like the fingers 36 underlie and support the lips 20, 22 of the sleeve 10. In this Figure 7 embodiment a wear sleeve 84, with an axially elongated central portion 86 around which reside the continuous portions 78 of the springs 76, and reduced outside diameter end portions 88 over which the spring fingers 80 extend, provides protection against erosion as does its counterpart 16 of the assembly 8. As shown in Figure 7, the seal assembly 70 also includes an anti-extrusion ring 90 of the same configuration and providing the same function as its counterpart 12 of the assembly 8.

## Claims

1. A plastic bore seal assembly for use as a static/dynamic seal in pipe connectors, pipe swivel joints and other piping devices, said assembly comprising;
(a) a plastic seal sleeve having a bore, a central portion with an external annular groove, and two opposite end portions each including an annular sealing lip;
(b) an anti-extrusion ring surrounding the seal sleeve in the external groove; and
(c) at least one sleeve-like finger spring residing in the seal sleeve bore, said spring having a continuous annular portion and a plurality of spring fingers extending axially from said annular portion, said spring fingers supporting said seal sleeve lip in its functional position and providing said lip with a memory property that is not affected by high pressure and temperature cycling.

2. A seal assembly according to claim 1 wherein the seal sleeve also includes an annular radial flange extending inwardly from each of the sleeve ends to retain the finger spring in proper axial location within said sleeve.

3. A seal assembly according to claim 1 wherein each seal sleeve sealing lip has a radiused surface for cooperation with the bore surface of a piping device to provide a fluid-tight seal therebetween.

4. A seal assembly to claim 1 wherein the anti-extrusion is rectangular in cross-section and is located midway between the ends of the seal sleeve.

5. A seal assembly according to claim 1 wherein the anti-extrusion ring is square in cross-section and is located at an annular edge of the seal sleeve central portion.

6. A seal assembly according to claim 1 wherein the seal sleeve central portion extends radially outward to an outside diameter that is substantially greater than the outside diameter of the sleeve's annular sealing lips.

7. A seal assembly according to claim 1 wherein the spring fingers are circumferentially spaced about the finger spring's central portion.

8. A seal assembly according to claim 7 wherein the spring fingers are separated from each other by narrow axial slots in the finger spring.

9. A seal assembly according to claim 1 further comprising a wear sleeve within the bore of the finger spring to prevent erosion of said spring by material flowing through said bore.

10. A seal assembly according to claim 9 wherein the wear sleeve has a central outwardly extending annular rib that supports the finger spring in tight-fitting position against the seal sleeve bore.

11. A seal assembly according to claim 1 wherein the finger spring annular portion is located midway between opposite ends of the spring, and spring fingers extend axially in opposite directions from said annular portion.

12. A seal assembly according to claim 1 including two finger springs with the continuous annular portion of each located at one end thereof.

## Patentansprüche

1. Bohrungsdichtungsbaugruppe aus Kunststoff zum Gebrauch als eine statische/dynamische Dichtung in Rohrverbindungsvorrichtungen, Rohrgelenkverbindungen und anderen Rohrvorrichtungen, wobei die Baugruppe aufweist:
(a) eine Kunststoffdichtungsmuffe mit einer Bohrung, einem zentralen Abschnitt mit einer äußeren ringförmigen Nut und zwei gegenüberliegenden Endabschnitten, wobei jeder eine ringförmige dichtende Lippe aufweist;
(b) einen Anti-Extrusionsring, der die Dichtungsmuffe in der äußeren Nut umgibt; und
(c) mindestens eine muffenartige Fingerfeder, die in der Dichtungsmuffenbohrung sitzt, wobei die Feder einen kontinuierlichen ringförmigen Abschnitt und eine Vielzahl von Federfingern hat, die sich axial von dem ringförmigen Abschnitt erstrecken, wobei die Federfinger die Dichtungsmuffenlippe in ihrer funktionalen Position aufnehmen und die Lippe mit einer Gedächtniseigenschaft versehen, die nicht durch hohen Druck und Temperaturwechsel beeinflußt wird.

2. Dichtungsbaugruppe nach Anspruch 1, in der die Dichtungsmuffe auch einen ringförmigen radialen Flansch aufweist, der sich nach innen von jedem der Muffenenden erstreckt, um die Fingerfeder in geeigneter axialer Anordnung innerhalb der Muffe zu halten.

3. Dichtungsbaugruppe nach Anspruch 1, in der jede dichtende Lippe der Dichtungsmuffe eine gekrümmte Oberfläche hat zum Zusammenwirken mit der Bohrungsoberfläche einer Rohrvorrichtung, um eine flüssigkeitsdichte Dichtung dazwischen zu gewährleisten.

4. Dichtungsbaugruppe nach Anspruch 1, bei der der Anti-Extrusionsring einen rechteckigen Querschnitt hat und in der Mitte zwischen den Enden der Dichtungsmuffe angeordnet ist.

5. Dichtungsbaugruppe nach Anspruch 1, bei der der Anti-Extrusionsring einen quadratischen Querschnitt hat und an einer ringförmigen Kante des zentralen Abschnittes der Dichtungsmuffe angeordnet ist.

6. Dichtungsbaugruppe nach Anspruch 1, bei der der zentrale Abschnitt der Dichtungsmuffe sich radial nach außen zu einem äußeren Durchmesser erstreckt, der im wesentlichen größer ist als der Aussendurchmesser der ringförmigen dichtenden Lippen der Muffe.

7. Dichtungsbaugruppe nach Anspruch 1, bei der die Federfinger um den zentralen Abschnitt der Fingerfeder umfangsmäßig beabstandet sind.

8. Dichtungsbaugruppe nach Anspruch 7, bei der die Federfinger voneinander durch enge axiale Schlitze in der Fingerfeder getrennt sind.

9. Dichtungsbaugruppe nach Anspruch 1, die weiterhin eine Verschleißmuffe innerhalb der Bohrung der Fingerfeder aufweist, um Erosion der Feder durch durch die Bohrung fließendes Material zu verhindern.

10. Dichtungsbaugruppe nach Anspruch 9, bei der die Verschleißmuffe eine zentrale sich nach außen erstreckende ringförmige Rippe hat, die die Fingerfeder in fest sitzender Lage gegen die Bohrung der Dichtungsmuffe abstützt.

11. Dichtungsbaugruppe nach Anspruch 1, bei der der ringförmige Abschnitt der Fingerfeder in der Mitte zwischen gegenüberliegenden Enden der Feder angeordnet ist und die Federfinger sich axial in gegenüberliegenden Richtungen von dem ringförmigen Bereich erstrecken.

12. Dichtungsbaugruppe nach Anspruch 1, die zwei Fingerfedern aufweist, von denen jede mit dem kontinuierlichen ringförmigen Bereich an dessen einem Ende angeordnet ist.

## Revendications

1. Ensemble de joint d'alésage en matière plastique, destiné à être utilisé comme joint statique/dynamique dans des raccords de tubes, des raccords tournants de tubes et d'autres dispositifs de canalisation, ledit ensemble comprenant :
(a) un manchon de joint en matière plastique ayant un alésage, une partie centrale présentant une gorge annulaire extérieure, et deux parties d'extrémités opposées dont chacune présente une lèvre d'étanchéité annulaire ;
(b) une bague anti-extrusion qui entoure le manchon de joint dans la gorge extérieur ; et
(c) au moins un ressort à doigts en forme de manchon, logé dans l'alésage du manchon de joint, ledit ressort ayant une partie annulaire continue et une pluralité de doigts élastiques qui partent axialement de ladite partie annulaire, lesdits doigts élastiques supportant ladite lèvre du manchon de joint dans sa position fonctionnelle et conférant à cette lèvre une propriété de mémoire qui n'est pas affectée par les oscillations de hautes pressions et de hautes températures.

2. Ensemble de joint selon la revendication 1, dans lequel le manchon de joint comprend aussi une collerette radiale annulaire s'étendant vers l'extérieur à partir de chacune des deux extrémités du manchon, pour retenir le ressort à doigts dans sa bonne position axiale à l'intérieur du manchon.

3. Ensemble de joint selon la revendication 1, dans lequel chaque lèvre d'étanchéité du manchon de joint présente une surface arrondie pour coopérer avec la surface de l'alésage du dispositif de canalisqtion pour établir un joint étanche au fluide entre cette lèvre et cette surface.

4. Ensemble de joint selon la revendication 1, dans lequel la bague anti-extrusion est de section transversale rectangulaire et est placé à mi-distance entre les extrémités du manchon du joint.

5. Ensemble de joint selon la revendication 1, dans lequel la bague anti-extrusion est de section carrée et est placée au niveau d'un bord annulaire de la partie centrale du manchon de joint.

6. Ensemble de joint selon la revendication 1, dans lequel la partie centrale du manchon de joint s'étend radialement vers l'extérieur pour atteindre un diamètre extérieur qui est sensiblement plus grand que le diamètre extérieur des lèvres d'étanchéité annulaire du manchon.

7. Ensemble de joint selon la revendication 1, dans lequel les doigts élastiques sont espacés circonférentiellement sur le tour de la partie centrale du ressort à doigts.

8. Ensemble de joint selon la revendication 7, dans lequel les doigts élastiques sont espacés les uns des autres par d'étroites fentes axiales du ressort à doigts.

9. Ensemble de joint selon la revendication 1, comprenant en outre un manchon d'usure placé dans l'alésage du ressort à doigts pour éviter l'érosion dudit ressort par la matière qui circule dans ledit alésage.

10. Ensemble de joint selon la revendication 9, dans lequel le manchon d'usure possède une nervure annulaire s'étendant vers l'extérieur qui supporte le ressort à doigts dans une position d'ajustement étanche contre l'alésage du manchon de joint.

11. Ensemble de joint selon la revendication 1, dans lequel la partie annulaire du ressort à doigts est placée à mi-distance entre les extrémités opposée du ressort, et les doigts élastiques s'étendent axialement dans des direction opposées à partir de ladite partie annulaire.

12. Ensemble de joint selon la revendication 1, comprenant deux ressorts à doigts, la partie annulaire continue de chacun de ces ressorts étant situées à une extrémité de ce ressort.
